# EUROPEAN PATENT APPLICATION

(11) **EP 1 544 821 A1**
(43) Date of publication of application: **22.06.2005**
(21) Application number: 04256770.1
(22) Date of filing: 03.11.2004
(51) Int. Cl.: G07F 19/00

(54) **A self-service terminal**

(30) Priority: 13.12.2003 GB 0302896
(71) Applicant: NCR INTERNATIONAL INC., Dayton, Ohio 45479 (US)
(72) Inventor: Gardner, John, Pitlessie Fife KY15 7 SL (GB)
(74) Representative: Williamson, Brian

(57) **Abstract**

A self service terminal (10) having an ActiveXFS control (18); a CEN-XFS interface (20) for sending messages between the terminal (10) and one or more service providers (14) and control means (16) operable to communicate with the ActiveXFS control (18); generate a command structure suitable for use by the service provider (14), and cause the ActiveXFS control (18) to send to the CEN-XFS interface (20) a signal indicative of the location of the command structure.

## Description

The present invention relates to a system, in particular a self-service terminal, such as an automated teller machine (ATM), a method and a computer program for extending multi-vendor services that are made available via an ActiveXFS control and a CEN-XFS application interface.

ActiveXFS is well known in the financial services field. It has a controls component that consists of a set of ActiveX Controls that use COM technology and utilise the CEN-XFS API for self-service device access. ActiveXFS is vendor independent and is designed to run on any product that supports the CEN-XFS API. This allows a single application to run in a multi-vendor hardware environment. This is useful for ATMs because these typically include a plurality of devices, such as card readers and printers, which may in practice be supplied from different vendors.

ActiveXFS controls are a set of COM objects written to the CEN-XFS API (see WOSA Extensions for Financial Services (XFS) interface specification; Device Class Interface - Programmer's Reference CWA-13449 and CWA-14050) that expose self-service device functionality in a manner that is readily usable by Rapid Application Development tools, including scripting languages. The primary intended user of these interfaces is an application developer who is required to offer business services to a consumer or business management functions to a supervisor. ActiveXFS is modularised on the basis of the logical device, so that solutions with any set of devices are possible.

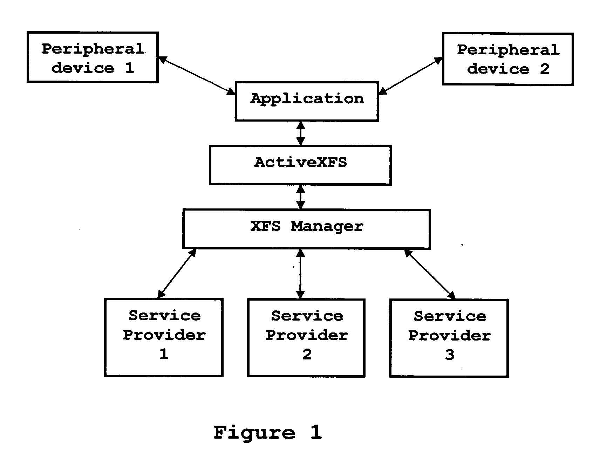

ActiveXFS is designed to interface with XFS service providers that comply with the CEN-XFS standard. Each service provider includes or is associated with a CEN-XFS interface that defines a service provider API that consists of commands and command data that have to be supplied to the service provider in the form of a void pointer to a command structure. As shown in Figure 1, the CEN-XFS interface may be provided within the self-service terminal.

ActiveXFS defines methods for each command, these methods having parameters and/or use properties to specify the input data required and creates the appropriate command structure. When a method is called, ActiveXFS sends the appropriate command to the service provider, with a void pointer to the command input data structure. The service provider, on receipt of a command, casts the void pointer to the appropriate command structure for that command. Responses from the service provider are handled in a similar way. Completion events from the service provider have response data in the form of a void pointer to a buffer that can be cast to the appropriate response structure for that command by the ActiveXFS control and then translated into ActiveXFS events.

ActiveXFS interfaces with the CEN-XFS manager, which has an API interface. This is like a transport interface in that it does not need to know about the actual command or data being sent as this is sent as a command code and a void pointer to the command data. Instead, the CEN-XFS manager merely passes this command and void pointer to the data to the service provider. This data needs to make sense to the service provider and therefore the service provider has to be able to cast the data to a structure that makes sense for the particular command. Hence, both ActiveXFS and the service provider need to know the command code and the corresponding data structure. To this end, for all new service provider functionality, a command code and command data structure needs to be published and also approved by the CEN-XFS committee. However, this can be problematic, because it is sometimes difficult and time consuming for vendors to go through the approval process.

An object of the invention is to provide an improved mechanism for allowing vendor specific functionality to be added without having to expose this through the CEN-XFS standard.

According to a first aspect of the present invention, there is provided a self service terminal that includes: an ActiveXFS control; a CEN-XFS interface for sending messages between the terminal and a plurality of service providers, and control means operable to communicate with the ActiveXFS control; generate a command structure suitable for use by the service provider, and cause the ActiveXFS control to send to the CEN-XFS interface a signal indicative of the location of the data structure.

By generating the command structure at the application level, the need to change the ActiveXFS interface when new service provider functionality is changed can be avoided. This is because in accordance with standard practice the ActiveXFS control merely has to tell the CEN-XFS interface where the command input data structure is. The CEN-XFS interface can then pass the message onto the relevant service provider. Hence, instead of ActiveXFS having to know what the command code and data structure are and therefore updating ActiveXFS each time a new non standard command is added to a service provider before it is approved by the committee, the application (which knows about the command and structure) builds up the structure and then the ActiveXFS control sends the command and void pointer to the command data structure to the service provider, through the XFS manager. This greatly improves the flexibility of the system and allows service providers more freedom to add new features, which can be used without having to be accepted by CEN-XFS.

Preferably, the control means are operable to generate the command structure using one or more methods provided in the ActiveXFS control. Preferably the ActiceXFS control includes a plurality of different methods that can be used by an application.

Preferably, the control means are operable to receive a command signal that includes data from an application or device for sending to one of the service provider; generate a command structure suitable for use by the service provider; include the received data within that structure to form a command data structure; store the command data structure, and send to the ActiveXFS control a signal indicative of the location of the data structure.

According to another aspect of the present invention, there is provided a method for use in a system having an ActiveXFS control and a CEN-XFS platform, the method comprising: generating using a control means a command structure suitable for use by one of a plurality of service providers, and causing the ActiveXFS control to send to the CEN-XFS interface a signal indicative of the location of the data structure.

Preferably the method further involves receiving at the control means a command signal that includes data from an application or device for sending to one of the service providers. The method may further involve including the received data within the command structure to form a command data structure; storing the command data structure, and sending a signal indicative of the location of the data structure to the ActiveXFS control.

According to yet another aspect of the present invention, there is provided a computer program, preferably on a data carrier or a computer readable medium, for use in a system having an ActiveXFS control and a CEN-XFS platform, the computer program being operable to communicate with the ActiveXFS control and one or more peripheral device and having code or instructions for: receiving a command signal that includes data from a peripheral device for sending to a service provider; generating a command structure suitable for use by the service provider; including the received data within that structure to form a command data structure; storing the command data structure, and sending a signal indicative of the location of the data structure to the ActiveXFS control.

Preferably, the computer program has code or instructions for generating the command structure using one or more methods provided in the ActiveXFS control.

According to still another aspect of the invention, there is provided an ActiveXFS control that includes a plurality of methods or functions for use by a control application to build a command structure, the ActiveXFS control being operable to send a signal indicative of the location of the command structure to a CEN-XFS interface in response to a signal from the control application.

Various aspects of the present invention will now be described by way of example only, and with reference to the accompanying drawings, of which:
Figure 2 is a block diagram of a system for extending the functionality of service provider services available via an Active XFS control and a CEN-XFS interface, and
Figure 3 is a flow diagram of the steps that would be taken to send a message from the terminal of the system of Figure 2 to a service provider.

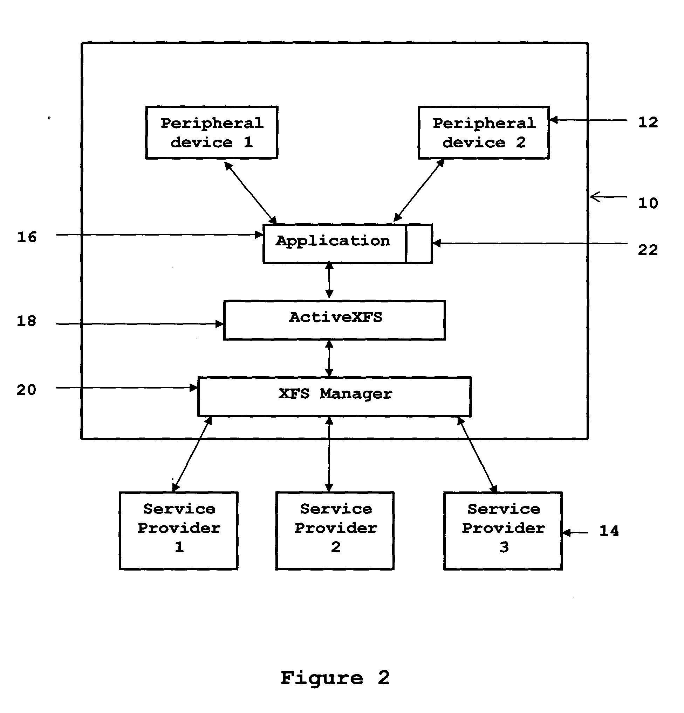

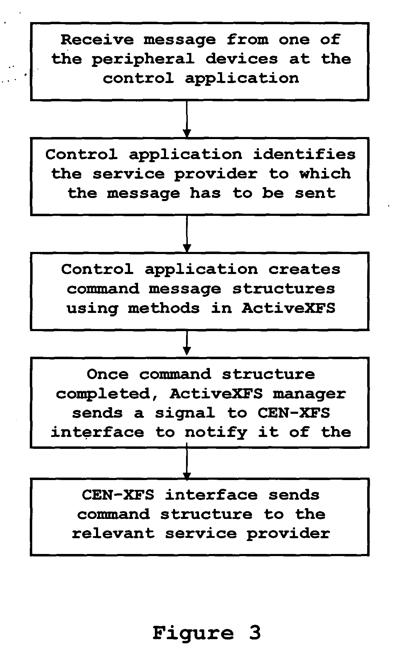

Figure 2 shows an automatic teller machine 10 that is operable to allow communication between a plurality of different peripheral devices 12 and remote service providers 14 via a single control application 16, a modified ActiveXFS control 18 and a conventional CEN-XFS interface 20. Included in the control application 16 is an ActiveXFS interface 22 that is operable to create command structures using a set of methods included in the ActiveXFS control 18. In this case, rather than the ActiveXFS control 18 creating command structures according to pre-determined criteria using data received from the application 16, the control application 16 does this. ActiveXFS holds the location of the command structure and the application adds to the structure using the ActiveXFS methods. ActiveXFS passes a structure identifier to the application 16. This can be used to identify the structure when sending a command to the service provider. Once the application sends a messages asking ActiveXFS to send a command to the service provider, the ActiveXFS control 18 sends a signal indicative of the location of the command structure to the CEN-XFS layer 20, which in turn sends the command to the service provider 14, as illustrated in Figure 3.

In the event that the service provider 14 wishes to send a return message to the control application 16, this would be done by sending the ActiveXFS control 18 a message in the form of a vendor specific event with a void pointer to a response buffer for response data. ActiveXFS 18 would then fire to the control application 16 a vendor specific completion event indicating success or failure. The response data could be extracted by the application 16 using another set of ActiveXFS methods.

As will be appreciated, to allow an application under development to be appropriately written, the methods available in the modified ActiveXFS control 18 would have to be published or otherwise made accessible to program developers. Likewise, the functionality provided by service providers would have to be made available to developers, as well as the command structure necessary, so that the control application 16 can be adapted to create this. Hence, when a message is received, the control application 16 is operable to identify whether it has to be sent to a service provider, and in the event that it has, then determine the command structure needed and generate that command structure using the methods provided in the ActiveXFS control.

As examples of the types of methods that could be used to allow the application 16 to build a command data input structure, ActiveXFS 18 could provide methods such as int structureID GetStructureID() for causing ActiveXFS to create an area in memory in which a new data structure is to be built and return a structureID to this area. When the application then wants to start building a command structure it would call other functions, such as AddInteger(int structureID, int integerValue), AddChar(int structureID, char charValue), etc, and use the structureID to identify the area in memory in which the structure being built is stored and to which integers or characters have to be added. These methods allocate/re-allocate memory to the supplied structureID and add the relevant data values to the command input structure. These methods would be called in the correct order to match the format of the structure. The structureID would be used to identify the location of the structure when the application wants to send a command to the service provider.

To allow the application to send a vendor specific command, the ActiveXFS control includes a method that can be used to uniquely identify a vendor specific command, for example VendorSpecificCommand(int commandCode, int structureID). The commandCode parameter would indicate the vendor specific command code to be called, with the structureID indicating the vendor specific structure to use as input data. In the event that this method is used by the application, it causes the ActiveXFS control to send the vendor specific command and data as a command code and void pointer to the vendor specific structure to the service provider, and return a requestID to the application for the command sent. This request ID can then be used in any subsequent responses so that the control application 16 can pair incoming responses with earlier sent messages.

The ActiveXFS control 18 is preferably configured to send a confirmation signal to the application 16 on receipt of a completion event message from the service provider 14. To do this, the ActiveXFS control 18 could fire a VendorSpecificCommandOK(int requestID )or VendorSpecificCommandFailed(int requestID) event to the control application 16 as appropriate. The event would include the requestID identifying which command it was associated with.

To allow the application 16 to extract the vendor specific completion event data, the ActiveXFS control could provide methods such GetInteger(int requestID, int* integerValue), GetChar(int requestID, char* charValue), etc. ActiveXFS 18 would provide methods for all possible types that could be used in CEN-XFS response data structures. The application would then call the appropriate methods to retrieve the vendor specific response structure for any data returned in response to the vendor specific command, identified by the requestID. These methods would be called in the correct order to match that of the format of the structure as indicated above for the input structure.

A skilled person will appreciate that variations of the disclosed arrangements are possible without departing from the invention. For example, whilst some specific methods are described above, in practice any suitable methods could be included in the modified ActiveXFS control for use by the control application. Ideally, the modified ActiveXFS control 18 would provide methods for all possible types of data input command that can be used in CEN-XFS input data structures. These are well known in the art and so will not be described in detail. Accordingly, the above description of a specific embodiment is made by way of example only and not for the purposes of limitations. It will be clear to the skilled person that minor modifications may be made without significant changes to the operation described.

## Claims

1. A self-service terminal having an ActiveXFS control; a CEN-XFS interface for sending messages between the terminal and a plurality of different service providers and control means operable to communicate with the ActiveXFS control; generate a command structure suitable for use by the service provider, and cause the ActiveXFS control to send to the CEN-XFS interface a signal indicative of the location of the command structure.

2. A self-service terminal as claimed in claim 1 wherein the control means are operable to generate the command structure using one or more methods provided in or by the ActiveXFS control.

3. A self-service terminal as claimed in claim 1 or claim 2 wherein the control means are operable to receive a message intended one of the service providers from a peripheral device and generate a command structure that includes that message, the command structure being suitable for use by the service provider.

4. A terminal as claimed in any of claims 1 to 3 that is an automated teller machine.

5. A method for use in a system that has an ActiveXFS control and a CEN-XFS platform, the method comprising: receiving a message for sending to a service provider; causing a control means to generate a command structure suitable for use by the service provider, and causing the ActiveXFS control to send to the CEN-XFS interface a signal indicative of the location of the data structure or the data structure itself.

6. A computer program, preferably on a data carrier or a computer readable medium, for use in a system having an ActiveXFS control and a CEN-XFS platform, the computer program being operable to communicate with the ActiveXFS control and one or more peripheral devices and having code or instructions for: receiving a command signal that includes data from a peripheral device for sending to a service provider, and generating a command structure suitable for use by the service provider, and including the received data within that structure to form a command data structure.

7. A computer program as claimed in claim 6 wherein the code or instructions for generating the command structure are operable to use one or more methods provided in the ActiveXFS control.
